# EUROPEAN PATENT APPLICATION

(11) **EP 1 770 945 A2**
(43) Date of publication of application: **04.04.2007**
(21) Application number: 06118625.0
(22) Date of filing: 08.08.2006
(51) Int. Cl.: H04L 29/06

(54) **Remote access control method and system for peripheral device connected to monitor and recording medium storing computer program for executing the method**

(30) Priority: 09.08.2005 KR 20050072979
(71) Applicant: Samsung Electronics Co., Ltd., Suwon-si Gyeonggi-do (KR)
(72) Inventor: Na, Kwang-yun, Republic of Korea (KR); Nam, Gung-eun, Republic of Korea (KR)
(74) Representative: Brandon, Paul Laurence

(57) **Abstract**

Provided are a remote access control method and system and a recording medium therefor. The method is performed on at least one peripheral device connected to a plurality of monitors (201_1, 201_2,..., 201_n) in a network, the method including if a change event occurs in the at least one peripheral device, the monitor changing a file system in the peripheral device (202 - 207); the monitor transmitting information regarding the changed file system to the server (220); the server displaying the information regarding the changed file system; the server receiving a control command based on the displayed information regarding the file system, and transmitting the control command to the monitor; the monitor receiving the control command and operating according to the control command and transmitting the operating result to the server; and the server operating based on the operating result received from the monitor.

## Description

The present invention relates to remote access control methods and systems.

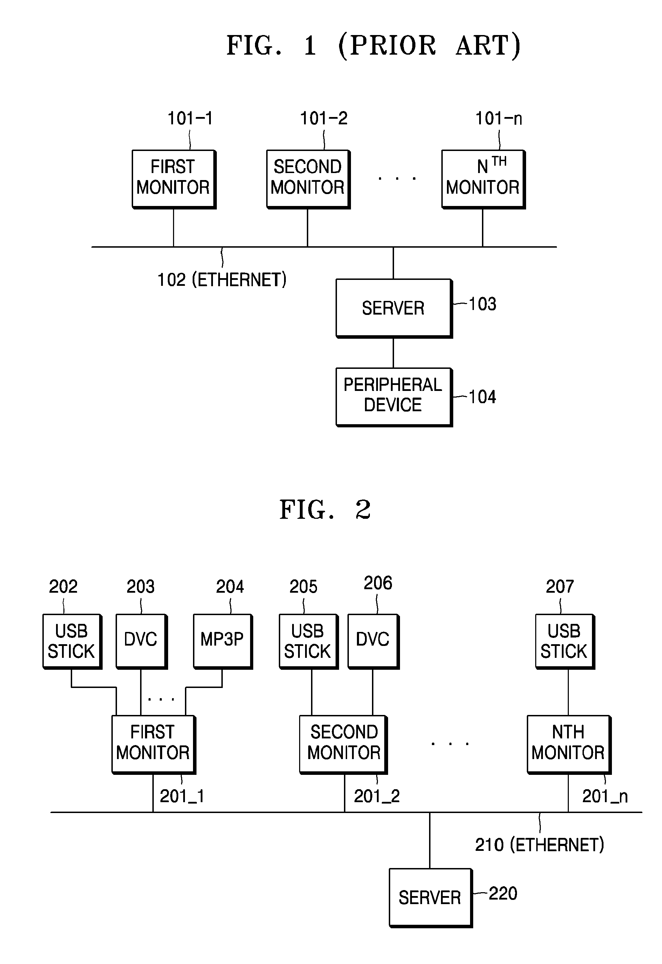

The development of monitors with a multimedia function has lead to the development of networks that enable a plurality of monitors to access a server via a remote desktop protocol, such as the Ethernet, as illustrated in FIG. 1.

Referring to FIG. 1, first through n^{th} monitors 101_1 through 101_n that support a remote session access a server 103 via the Ethernet 102 and can access a peripheral device 104 connected to the server 103. Thus, the first through n^{th} monitors 101_1 through 101_n are capable of managing and using files stored in the peripheral device 104 via the Ethernet 102 and the server 103. The first through n^{th} monitors 101_1 through 101_n may be defined as clients corresponding to the server 103.

However, recently, the introduction of universal serial buses (USB) allows peripheral devices, such as USB sticks, digital video cameras, MPEG 3 players (MP3P), and radio frequency identification (RFID) devices, to be connected directly to monitors having a USB port or the like, e.g., a hub.

If in the network illustrated in FIG. 1, the first through n^{th} monitors 101_1 through 101_n are monitors to which peripheral devices can be connected, the first n^{th} monitors 101_1 through 101_n can access all of the files stored in the peripheral device 104 connected to the server 103, and all of the files stored in peripheral devices connected directly to the n^{th} monitors 101_1 through 101_n. In this case, a monitor's manager can easily manage and use all the files in the peripheral devices connected thereto and the files in the peripheral device 104 connected to the server 103.

However, since existing networks, such as that shown in FIG. 1, are constructed such that monitors must be connected to a server to perform a desired operation, the server cannot manage and use the peripheral devices connected directly to the monitors. Thus, a manager of the server must connect the peripheral devices to the server in order for the server to manage or use files stored in the peripheral devices.

Preferred embodiments of the present invention aim to provide a remote access control method and system for enabling a server to remotely access peripheral devices connected to a monitor in a network that allows a remote access between the monitor and the server, and a recording medium storing a computer program for executing the method.

Preferred embodiments of the present invention also aim to provide a remote access control method and system for enabling a server at a remote site to manage and use a file system in a peripheral device connected to a monitor in a network that allows a remote access between the monitor and the server, and a recording medium storing a computer program for executing the method.

According to an aspect of the present invention, there is provided a remote access control method which is performed on at least one peripheral device connected to a plurality of monitors in a network which establishes a remote connection between the plurality of the monitors and a server, the method comprising (a) the server receiving information regarding a file system of the at least one peripheral device from one of the plurality of the monitors, and displaying the information regarding the file system; (b) the server receiving a control command based on the displayed information, and transmitting the control command to the monitor; (c) the server receiving a control result corresponding to the control command from the monitor, and operating according to the received control result.

According to another aspect of the present invention, there is provided a remote access control method which is performed on at least one peripheral device connected to a plurality of monitors in a network which establishes a remote connection between the plurality of the monitors and a server, the method comprising (a) the server receiving information regarding a file system of the at least one peripheral device from one of the plurality of monitors, and determining whether the received information regarding the file system contains an installing request for the file system or an uninstalling request for the file system; (b) if the received information contains the installing request for the file system, the server installing the file system received from the monitor, and displaying the information regarding the installed file system; (c) the server controlling the file system based on the displayed information; and (d) if the received information contains the uninstalling request for the file system, the server uninstalling the file system.

According to another aspect of the present invention, there is provided a remote access control method performed on at least one peripheral device connected to a plurality of monitors in a network that establishes a remote connection between the plurality of the monitors and a server, the method comprising (a) if a change event occurs in the at least one peripheral device, a monitor connected to the peripheral device changing a file system regarding the at least one peripheral device; (b) the monitor checking whether the monitor is remotely connected to the server; (c) if the monitor is remotely connected to the server, the monitor transmitting information regarding the changed file system to the server; (d) the monitor receiving a control command regarding the file system from the server, and operating according to the received control command; and (e) the monitor transmitting the operating result to the server.

According to another aspect of the present invention, there is provided a remote access control method performed on at least one peripheral device connected to a plurality of monitors in a network that establishes a remote connection between the plurality of the monitors and a server, the method comprising (a) if a change event occurs in the at least one peripheral device, a monitor connected to the peripheral device determining whether the change event is caused by one of connecting the peripheral device to or inserting a medium into the monitor, and separating the peripheral device from or ejecting the medium from the monitor; (b) if the change event is caused by the connection of the peripheral device or the insertion of the medium, the monitor determining whether a file system of the peripheral device is supportable; (c) if the file system in the peripheral device is supportable, the monitor installing the file system of the peripheral device, and requesting the server to install the file system; and (d) if the change event is caused by the separation of the peripheral device or the ejection of the medium, the monitor uninstalling the file system in the peripheral device, and requesting the server to uninstall the file system.

According to another aspect of the present invention, there is provided a remote access control method performed on at least one peripheral device connected to a plurality of monitors in a network that establishes a remote connection between the plurality of the monitors and a server, the method comprising (a) if a change event occurs in the least one peripheral device, the monitor changing a file system in the at least one peripheral device; (b) the monitor transmitting information regarding the changed file system to the server; (c) the server displaying the information regarding the changed file system; (d) the server receiving a control command based on the displayed information regarding the file system, and transmitting the control command to the monitor; (e) the monitor receiving the control command and operating according to the control command; (f) the monitor transmitting the operating result to the server; and (g) the server operating based on the operating result received from the monitor.

According to another aspect of the present invention, there is provided a remote access control system comprising at least one monitor which is connected to at least one peripheral device, and changes a file system of the peripheral device if a change event occurs in the peripheral device; and a server which is remotely connected to the monitor via the Ethernet, receives information regarding the changed file system from the at least one monitor and manages the file system of the peripheral device based on the received information.

According to another aspect of the present invention, there is provided a server on a network which establishes a remote connection between the server and the at least one monitor, the monitor being connected to at least one peripheral device, the server comprising an Ethernet interface unit establishing remote communications with the monitor via the Ethernet; a controller receiving information regarding a file system of the peripheral device from the Ethernet interface unit, displaying the received information, and managing the file system of the peripheral device based the displayed information; and a display unit displaying the information regarding the file system under control of the controller.

According to another aspect of the present invention, there is provided a monitor on a network which establishes a remote connection between at least one monitor connected to at least one peripheral device, and a server, the monitor comprising an Ethernet interface unit establishing remote communications with the server via the Ethernet; a universal serial bus port connected to the peripheral device via a universal serial bus; and a controller changing a file system of a peripheral device and transmitting information regarding the changed file system to the Ethernet interface unit, if the controller recognizes that a change event occurs in the peripheral device via the universal serial bus port.

According to another aspect of the present invention, there is provided a recording medium having embodied thereon a program for executing a remote access control method which is performed on at least one peripheral device connected to a plurality of monitors in a network which establishes a remote connection between a server and the plurality of the monitors, the method comprising (a) the server receiving information regarding a file system in the at least one peripheral device from one of the plurality of the monitors, and displaying the information regarding the file system; (b) the server receiving a control command based on the displayed information, and transmitting the control command to the monitor; and (c) the server receiving a control result corresponding to the control command from the monitor, and operating according to the received control result.

According to another aspect of the present invention, there is provided a recording medium having embodied thereon a program for executing a remote access control method which is performed on at least one peripheral device connected to a plurality of monitors in a network which establishes a remote connection between a server and the plurality of the monitors, the method comprising (a) if a change event occurs in one of the at least one peripheral device, a monitor connected to the peripheral device changing a file system regarding the peripheral device; (b) the monitor checking whether the monitor is remotely connected to the server; (c) if the monitor is remotely connected to the server, the monitor transmitting information regarding the changed file system to the server; (d) the monitor receiving a control command regarding the file system from the sever, and operating according to the received control command; and (e) the monitor transmitting the operating result to the server.

Further features for the present invention are set out in the appended claims.

The present invention will become more apparent by describing in detail exemplary embodiments thereof with reference to the attached drawings in which:

FIG. 1 is a block diagram illustrating a conventional network for establishing a remote access between a plurality of monitors supporting a remote session and a server;

FIG. 2 is a block diagram illustrating a network based on a remote access control system according to an exemplary embodiment of the present invention;

FIG. 3 is a detailed block diagram illustrating the connection between a first monitor and a server shown in FIG. 2, according to an exemplary embodiment of the present invention;

FIG. 4 is a flowchart illustrating the operations of a server performed in a remote access control method, according to an exemplary embodiment of the present invention;

FIG. 5 is a flowchart illustrating the operations of a monitor performed in a remote access control method, according to an exemplary embodiment of the present invention;

FIG. 6 is a detailed flowchart illustrating the operation of the monitor illustrated in FIG. 5;

FIG. 7 is an overall flowchart illustrating a remote access control method based on the methods of FIGS. 4 through 6, according to an exemplary embodiment of the present invention;

FIG. 8 is a flowchart illustrating the operations of a server performed in a remote access control method, according to another exemplary embodiment of the present invention;

FIG. 9 is a flowchart illustrating the operations of a monitor performed in a remote access control method, according to another exemplary embodiment of the present invention;

FIG. 10 is an overall flowchart illustrating a remote access control method based on the methods of FIGS. 8 and 9, according to another exemplary embodiment of the present invention; and

FIG. 11 is a flowchart illustrating another exemplary embodiment of the present invention.

Hereinafter, exemplary embodiments of the present invention will be described in detail with reference to the accompanying drawings.

FIG. 2 is a block diagram illustrating a network based on a remote access control system according to an exemplary embodiment of the present invention. Referring to FIG. 2, the network includes first through n^{th} monitors 201_1 through 201_n, the Ethernet 210, and a server 220 capable of remotely accessing the first through n^{th} monitors monitor 201_1 through 201_n via the Ethernet 210.

The first monitor 201_1 is connected to peripheral devices, such as a USB stick 202, a digital video camera (DVC) 203, and an MP3 player (MP3P) 204. The second monitor 201_2 is connected to peripheral devices such as a USB stick 205 and a DVC 206. The n^{th} monitor 201_n is connected to a peripheral device such as a USB stick 207.

According to preferred embodiments of the present invention, any type of a device into which a medium can be inserted or on which a medium can be mounted, and that can be connected to a USB can be connected as a peripheral device to the first through n^{th} monitors 201_1 through 201_n. The medium, such as a disc or a memory, contains a file system of files stored therein, and each file system may contain information regarding the files and folders.

As described above, at least one peripheral device may be connected to the first through n^{th} monitors 201_1 through 201_n via a communication bus such as a USB. When a change event of a peripheral device occurs, the file system of the peripheral device is changed.

The change event of the peripheral device may occur when at least one of the peripheral devices connected to the first through n^{th} monitors 201_1 through 201_n is disconnected from the first through n^{th} monitors 201_1 through 201_n, a new peripheral device is connected to the first through n^{th} monitors 201_1 through 201_n, or a medium is inserted into or ejected from at least one of the peripheral devices connected to the first through n^{th} monitors 201_1 through 201_n.

When the file system of the peripheral device is changed by the change event, the first through n^{th} monitors 201_1 through 201_n transmit information regarding the file system to the server 220 via the Ethernet 210.

If the change event is caused by a connection of a peripheral device to the first through n^{th} monitors 201_1 through 201_n or insertion of a medium into at least one peripheral device connected to the first through n^{th} monitors 201_1 through 201_n, the first through n^{th} monitors monitor 201_1 through 201_n may install the file system of the peripheral device and require the server 220 to install the file system. In this case, the first through n^{th} monitors 201_1 through 201_n determine whether the file system is supportable before installing the file system. For instance, the first through n^{th} monitors 201_1 through 201_n determine whether the file system is supportable by checking a file allocation table (FAT) or a mass storage class of the file system. If the checking result reveals that the file system is supportable, the first through n^{th} monitors 201_1 through 201_n install the file system.

If the change event is caused by a disconnection of a peripheral device from the first through n^{th} monitors 201_1 through 201_n or ejection of a medium from at least one peripheral device connected to the first through n^{th} monitors 201_1 through 201_n, the first through n^{th} monitors 201_1 through 201_n may uninstall the file system of the peripheral device and require the server 220 to uninstall the file system.

The Ethernet 210 may operate according to a remote desktop protocol to establish a remote access between the first through n^{th} monitors 201_1 through 201_n and the server 220.

The server 220 may remotely access the first through n^{th} monitors monitor 201_1 through 201_n via the Ethernet 210. Upon receiving information regarding a changed file system from one of the first through n^{th} monitors 201_1 through 201_n, the server 220 manages a file system of a corresponding peripheral device based on the received information.

In other words, when receiving a request for installing of a file system from one of the first through n^{th} monitors 201_1 through 201_n, the server 220 installs the file system and displays information based on the file system so that a server manager can view the information. In this case, the server 220 may display the information using an explorer program such as the Windows Explorer. The displayed information may have a hierarchical structure consisting of file information or information regarding folders and files.

Upon receiving a request for uninstalling of a file system from one of the first through n^{th} monitors 201_1 through 201_n, the server 220 uninstalls the file system. In this case, the server 220 need not manage the file system.

The first through n^{th} monitors 201_1 through 201_n of FIG. 2 may be defined as clients corresponding to the server 220.

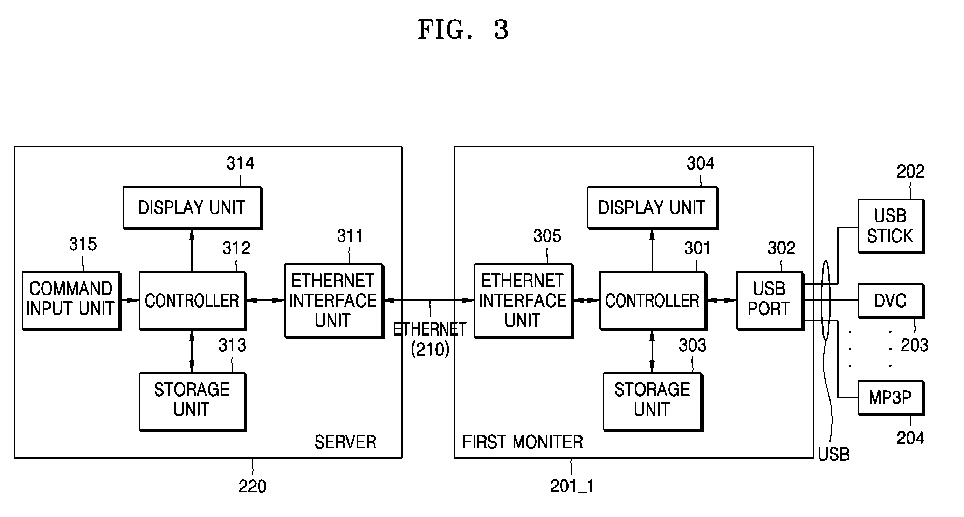

FIG. 3 is a detailed block diagram illustrating the connection between the first monitor 201_1 and the server 220 illustrated in FIG. 2, according to an exemplary embodiment of the present invention. Referring to FIG. 3, the first monitor 201_1 includes a controller 301, a USB port 302, a storage unit 303, a display unit 304, and an Ethernet interface unit 305.

When recognizing the occurrence of a change event of the peripheral device via the USB port 302, the controller 301 changes the file system of the peripheral device. For instance, when a new memory card is inserted into the DVC 203 or the USB port 302 is connected to a new peripheral device, the controller 301 determines whether the file system of the memory card or the peripheral device is supportable, and installs the file system and stores it in the storage unit 303 when it is determined that the file system is supportable. The installed file system may be displayed on the display unit 304.

If the memory card is ejected from the DVC 203 or one of the USB stick 202, the DVC 203, and the MP3P 204 is separated from the USB port 302, the controller 301 uninstalls the file system of the ejected memory card or the separated peripheral device by deleting the file system from the storage unit 303. The storage unit 303 may be included in the controller 301.

The controller 301 transmits information regarding the changed file system to the server 220 using the Ethernet interface unit 305. When the changed file system is installed, the information regarding the changed file system may specify a request for installing the changed file system and the changed file system. When the changed file system is uninstalled, the information regarding the changed file system may include a request for uninstalling the changed file system.

The Ethernet interface unit 305 establishes remote communications between the server 220 and the first monitor 201_1 via the Ethernet 210. The USB port 302 is connected to peripheral devices, such as the USB stick 202, the DVC 203, and the MP3P 204, via the USB port 302, thereby allowing data communications between the controller 301 and the peripheral devices.

The server 220 includes an Ethernet interface unit 311, a controller 312, a storage unit 313, a display unit 314, and a command input unit 315.

The Ethernet interface unit 311 establishes remote communications between the first monitor 201_1 and the server 220 via the Ethernet 210.

The controller 312 receives the information regarding the file systems of the peripheral device from the Ethernet interface unit 311, stores the received information in the storage unit 313 while displaying it on the display unit 314, and manages the file system of the peripheral devices based on the information displayed on the display unit 314.

That is, upon receiving the information regarding the file system of one of the peripheral devices, which contains a request for installing the file system, the controller 312 installs the file system and stores the installed file system in the storage unit 303 while the information regarding the installed file system is being displayed on the display unit 314. Thus, a server manager can manage the file system based on the information displayed on the display unit 314. For instance, the server manager may control editing (deleting, copying, pasting, or cutting) or reproducing a file included in the file system, based on the information displayed on the display unit 314.

The server manager's command is input to the controller 312 via the command input unit 315. For instance, an edit control command or a reproduction control command may be input to the controller 312 via the command input unit 315 based on the displayed information regarding the file system.

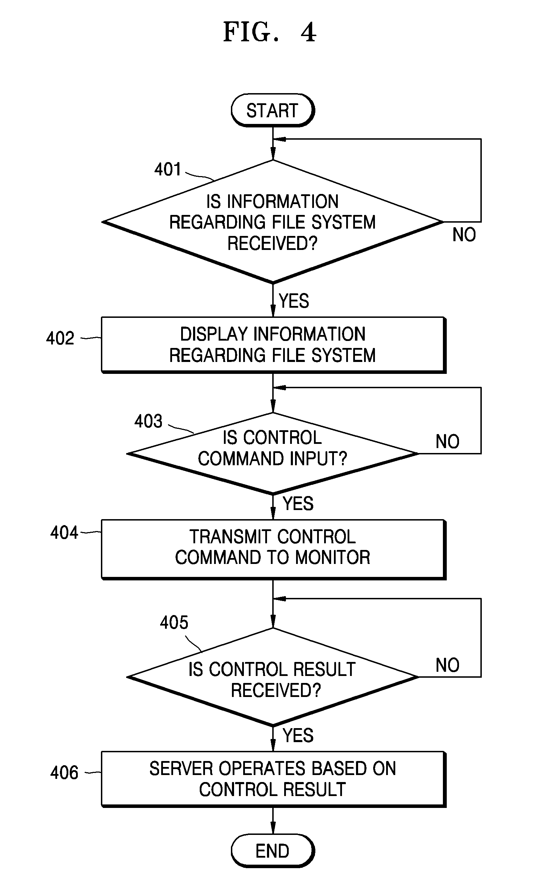

FIG. 4 is a flowchart illustrating the operations of a server performed in a remote access control method, according to an exemplary embodiment of the present invention. Specifically, FIG. 4 illustrates the operation of a server when a new peripheral device is connected to or a medium is inserted into a monitor. The operation of the server illustrated in FIG. 4 will now be described with reference to FIG. 2.

After receiving the information regarding a file system in a peripheral device from one of the first through n^{th} monitors 201_1 through 201_n (operation 401), the server 220 displays the received information (operation 402). In this case, the server 220 may display the received information using an explorer program such as Windows Explorer. For convenience of explanation, the operation of the server illustrated in FIG. 4 will now be described with respect to the first monitor 201_1.

When a manager of the server 220 inputs a control command to the server 220 based on the displayed information (operation 403), the server 220 transmits the control command to the first monitor 201_1 (operation 404). The input control command may be an edit control command or a reproduction control command regarding a file selected based on the displayed information.

Next, after receiving a control result corresponding to the control command from the first monitor 201_1 (operation 405), the server 220 operates based on the received control result (operation 406). If the control command is to edit the file system, in operation 405, the server 220 may display information based on the information regarding the file system that includes the received control result. If the control command is to reproduce a file selected based on the displayed information, the server 220 may reproduce the selected file based on the received control result, in operation 406.

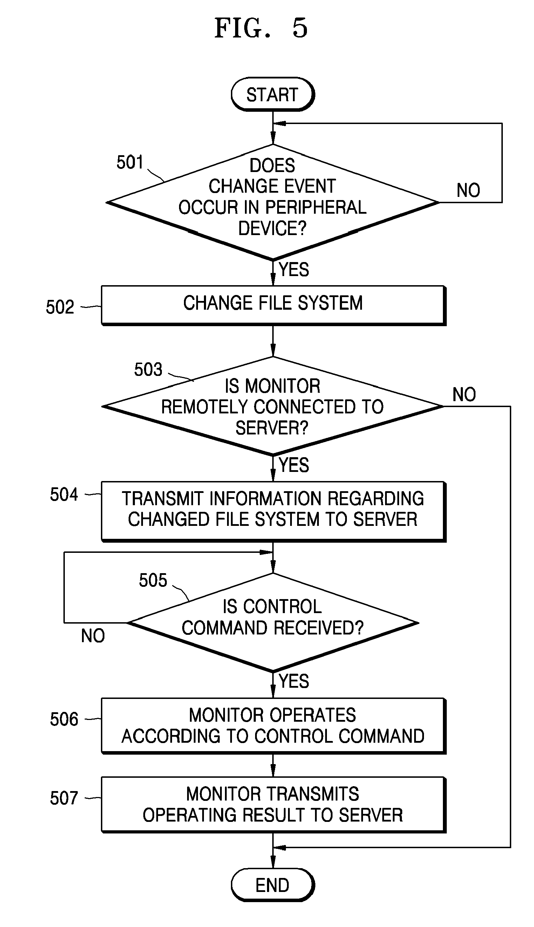

FIG. 5 is a flowchart illustrating the operation of a monitor performed in a remote access control method, according to an exemplary embodiment of the present invention. Specifically, FIG. 5 illustrates the operation of the monitor when a server remotely connected to a monitor operates as illustrated in FIG. 4, that is, when a new peripheral device is connected to or a medium is inserted into the monitor. As in FIG. 4, the monitor described with reference to FIG. 5 will be considered as the first monitor 201_1.

When a change event of one of the peripheral devices connected to the first monitor 201_1 occurs (operation 501), the first monitor 201_1 changes a file system of the peripheral device (operation 502). In this case, as described above with reference to FIG. 2, the first monitor 201_1 determines whether it can support the file system, and changes the file system when it is determined that the file system can be supported.

Next, it is determined whether the first monitor 201_1 is remotely connected to the server 220 (operation 503). If it is determined in operation 503 that the first monitor 201_1 is remotely connected to the server 220, the information regarding the changed file system is transmitted to the server 220 (operation 504).

Next, upon receiving a control command regarding the file system from the server 220 (operation 505), the first monitor 201_1 operates according to the received control command (operation 506).

Next, the result of operating the first monitor 201_1 is transmitted to the server 220 (operation 507).

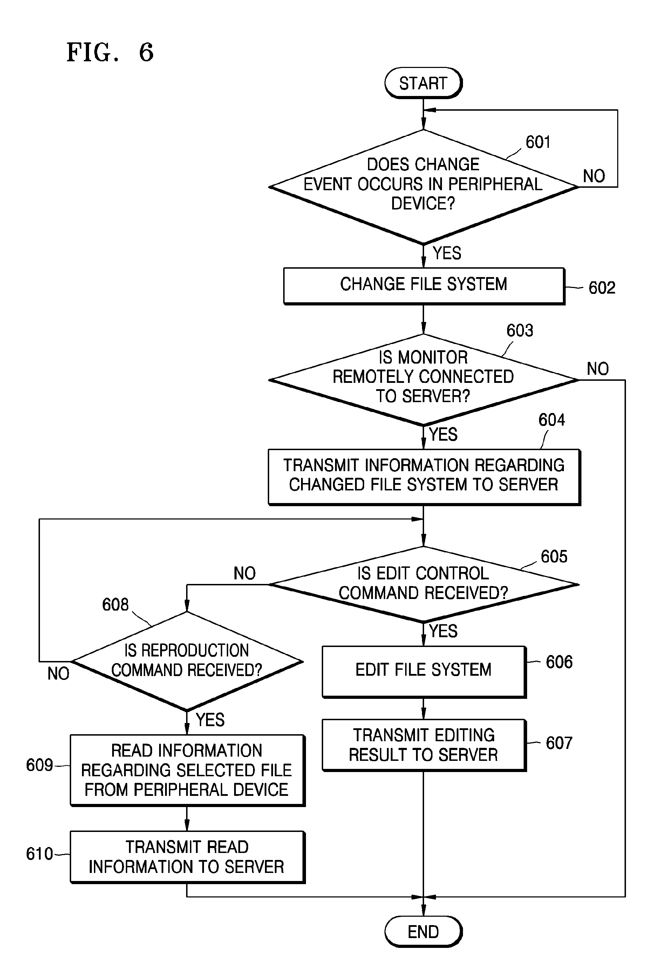

FIG. 6 is a detailed flowchart illustrating the operation of the monitor illustrated in FIG. 5, in particular, operations 505 through 507 of FIG. 5.

In FIG. 6, operations 601 through 604 are the same as operations 501 through 504 of FIG. 5, respectively, and a description thereof will be omitted here.

The first monitor 201_1 transmits the information regarding a changed file system to the server 220 (operation 604). Next, after receiving an edit control command from the server 220 (operation 605), the first monitor 201_1 edits the changed file system installed therein and a file system stored in a corresponding peripheral device (operation 606). The edit control command has been described with reference to FIG. 3.

Next, the first monitor 201_1 transmits the editing result, as the control result corresponding to the edit control command, to the server 220 (operation 607).

After receiving a reproduction command from the server 220 (operation 608), the first monitor 201_1 reads information regarding a file selected based on a corresponding file system from a related peripheral device (operation 609), and transmits the read file information, as the result corresponding to the reproduction command, to the server 220 (operation 610).

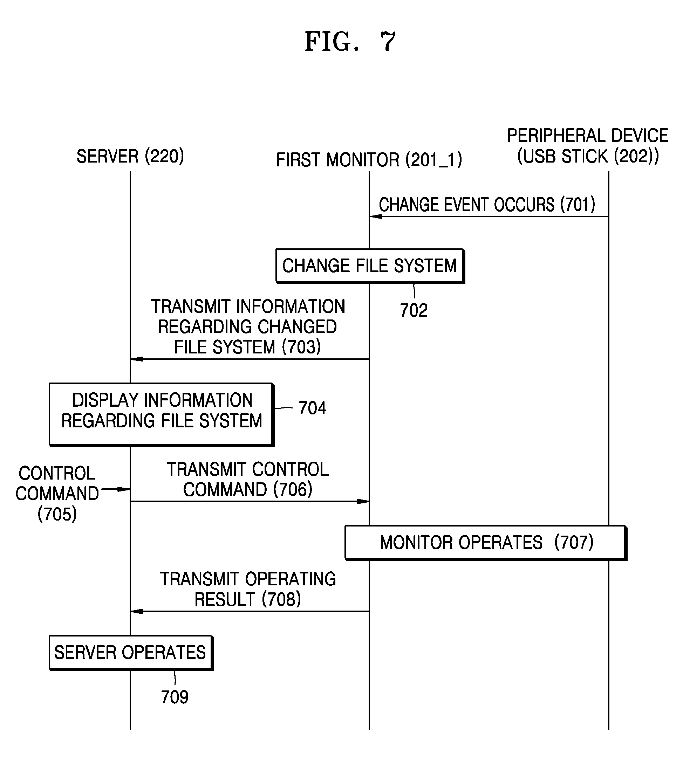

FIG. 7 is a flowchart illustrating a remote access control method based on FIGS. 4 through 6, according to an exemplary embodiment of the present invention. That is, FIG. 7 is a flowchart illustrating a remote access control method when a new peripheral device is connected to or a medium is inserted into a monitor. The method of FIG. 7 will now be described with respect to the first monitor 201_1 of FIG. 2.

When a change event occurs in one of the peripheral devices connected to the first monitor 201_1 (operation 701), the first monitor 201_1 changes a file system in the peripheral device (operation 702). In this case, the first monitor 201_1 determines whether the file system is supportable, and changes it when the file system is determined to be supportable.

Next, the first monitor 201_1 transmits the information regarding the changed file system to the server 220 (operation 703). Then, the server 220 displays the received file system (operation 704). In this case, the server 220 may display the information regarding the changed file system using an explorer program as described with reference to FIG. 4.

When a manager of the server 220 inputs a control command based on the displayed information regarding the file system (operation 705), the server 220 transmits the control command to the first monitor 201_1 (operation 706). The control command may be an edit control command or a reproduction control command regarding a file.

Upon receiving the control command from the server 220 based on the displayed information, the first monitor 201_1 performs the control command (operation 707). In other words, when the received control command is an edit control command, the file system in the first monitor 201_1 and a file system in a corresponding peripheral device are edited according to the edit control command. If the received control command is a reproduction control command, the first monitor 201_1 reads file information in a corresponding peripheral device based on the file system.

Next, the first monitor 201_1 transmits the result of performing the control command to the server 220 (operation 708). Then, the server 220 operates based on the performing result of the first monitor 201_1. That is, when the control command is an edit control command, the server 220 may display information regarding an edited file system. If the control command is a reproduction control command, the server 220 may reproduce a selected file.

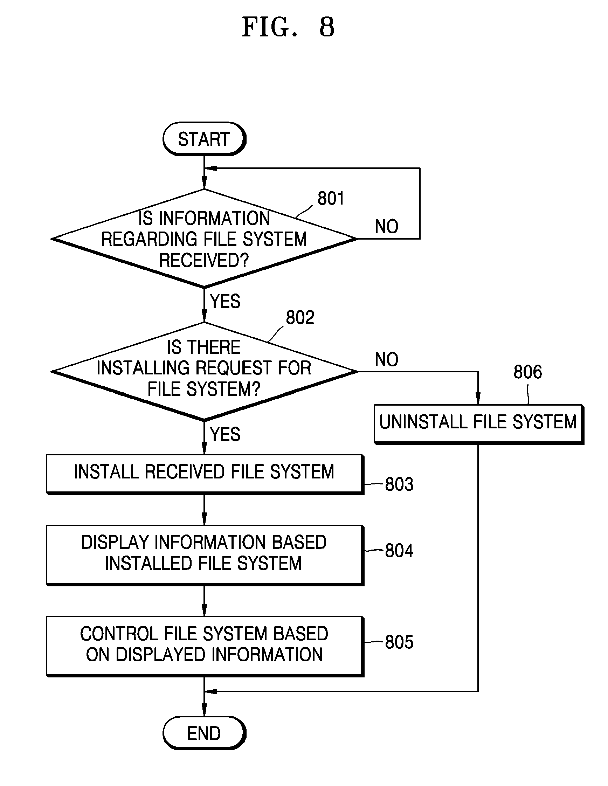

FIG. 8 is a flowchart illustrating the operations of a server performed in a remote access control method according to another exemplary embodiment of the present invention. In particular, FIG. 8 illustrates the operation of a server for all the cases where a new peripheral device is connected to or separated from a monitor or where a medium is inserted into or ejected from a monitor. For convenience of explanation, the flowchart of FIG. 8 will now be described with respect to the first monitor 201_1.

Referring to FIG. 8, when receiving information regarding a file system in a peripheral device from the first monitor 201_1 (operation 801), the server 220 determines whether the receiving of the information regarding a file system in a peripheral device is an installing request or an uninstalling request for the file system (operation 802).

If the receiving of the information regarding a file system in a peripheral device is the installing request for the file system, the server 220 installs the file system received from the first monitor 201_1 (operation 803), and displays information regarding the installed file system (operation 804).

Next, the server 220 controls the file system based on the displayed information (operation 805). More specifically, the server 220 transmits a control command to the first monitor 201_1 when inputting the control command regarding the file system based on the displayed information, and operates according to a control result, which corresponds to the control command, received from the first monitor 201_1. The control command may include edit control regarding the file system and/or reproduction control regarding a file selected based on the displayed information.

If the information regarding the file system received in operation 801 contains the uninstalling request for the file system, the server 220 uninstalls the file system (operation 806).

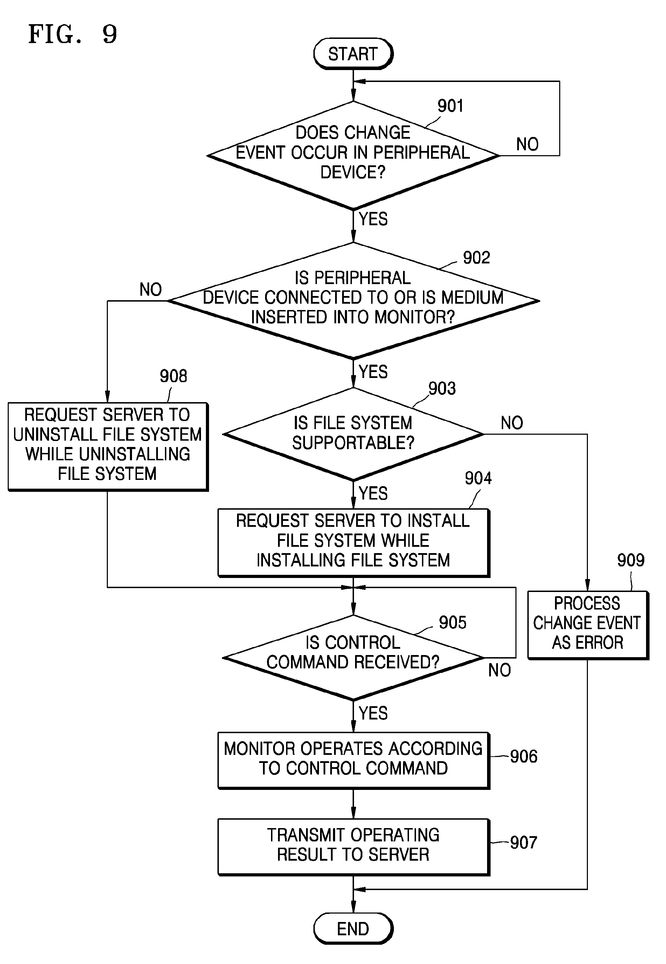

FIG. 9 is a flowchart illustrating the operations of a monitor performed in a remote access control method according to another exemplary embodiment of the present invention. The operation of the monitor illustrated in FIG. 9 corresponds to that of the server illustrated in FIG. 8. For convenience of explanation, the flowchart of FIG. 9 will be described with respect to the first monitor 201_1 of FIG. 2.

Referring to FIG. 9, when a change event occurs in one of the peripheral devices connected to the first monitor 201_1 (operation 901), the first monitor 201_1 determines whether the change event is caused by connecting a new peripheral device to or inserting a medium into the first monitor 201_1 (operation 902).

If the change event is caused by connecting a new peripheral device to or inserting a medium into the first monitor 201_1, the first monitor 201_1 determines whether a file system in the connected peripheral device is supportable as described with reference to FIG. 2 (operation 903).

If the file system in the peripheral device is supportable, the first monitor 201_1 requests the server 220 to install the file system while installing the file system in the peripheral device (operation 904). In this case, the first monitor 201_1 transmits the information regarding the file system to the server 220.

After receiving a control command regarding the file system from the server 220 (operation 905), the first monitor 201_1 operates according to the received control command (operation 906), and transmits the operating result to the server 220 (operation 907).

If the change event is caused by separating a peripheral device from or ejecting a medium from the first monitor 201_1, the first monitor 201_1 requests the server 220 to uninstall the file system while uninstalling the file system in the peripheral device (operation 908).

If it is determined in operation 903 that the file system is not supportable, the first monitor 201_1 processes the change event as an error (operation 909).

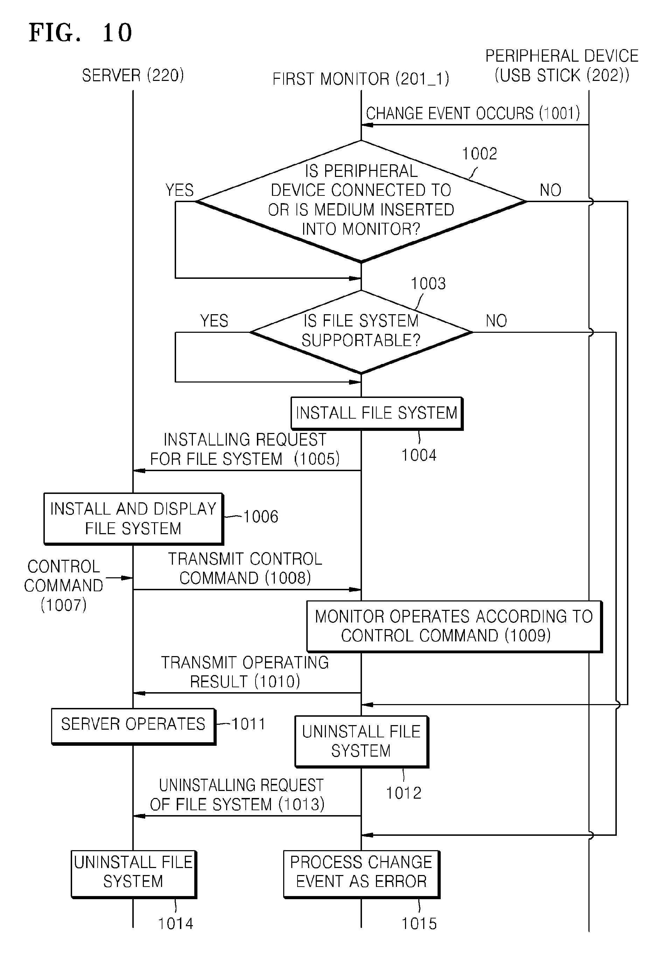

FIG. 10 is an overall flowchart illustrating a remote access control method based on the methods of FIGS. 8 and 9, according to another exemplary embodiment of the present invention. The flowchart of FIG. 10 will be described with respect to the first monitor 201_1 of FIG. 2.

Referring to FIG. 10, when a change event occurs in a peripheral device (operation 1001), the first monitor 201_1 determines whether the change event is caused by connecting the peripheral device to or inserting medium into the first monitor 201_1 (operation 1002). If the change event occurs due to the connection of the peripheral device or inserting of the medium, the first monitor 201_1 determines whether a file system of the peripheral device or the medium is supportable (operation 1003). If the file system can be supported by the first monitor 201_1, the first monitor 201_1 installs the file system (operation 1004).

Next, the first monitor 201_1 requests the server 220 to install the file system (operation 1005). Then, the server 220 displays the information regarding the file system while installing the file system (operation 1006). In this case, the server 220 may display the information regarding the file system using an explorer program.

Next, when a manager of the server 220 inputs a control command based on the displayed information (operation 1007), the control command is transmitted to the first monitor 201_1 (operation 1008). Then, the first monitor 201_1 operates according to the control command (operation 1009). In this case, the first monitor 201_1 may operate according to the control command while communicating with the peripheral device. For instance, if the control command is an edit control command, the first monitor 201_1 edits the file system installed therein, and communicates with the peripheral device so that the file system stored in the peripheral device can be edited. If the control command is a reproduction control command regarding a file, the first monitor 201_1 communicates with the peripheral device to read the information regarding the file to be reproduced from the peripheral device based on the installed file system.

Next, after operating according to the control command, the first monitor 201_1 transmits the operating result to the server 220 (operation 1010). Then, the server 220 operates based on the received operating result (operation 1011). In this case, the operation of the server 220 is the same as operation 709 of FIG. 7.

If it is determined in operation 1002 that the change event is caused by separation of a peripheral device from or ejection of a medium from the first monitor 201_1, not by connection of the peripheral device to or insertion of the medium into the first monitor 201_1, the first monitor 201_1 uninstalls the file system (operation 1012). Next, the first monitor 201_1 requests the server 220 to uninstall the file system (operation 1013).

Then, the server 220 uninstalls the file system and completes management of the file system (operation 1014).

Also, it is determined in operation 1003 that the file system cannot be supported by the first monitor 201_1, the first monitor 201_1 processes the change event as an error (operation 1015).

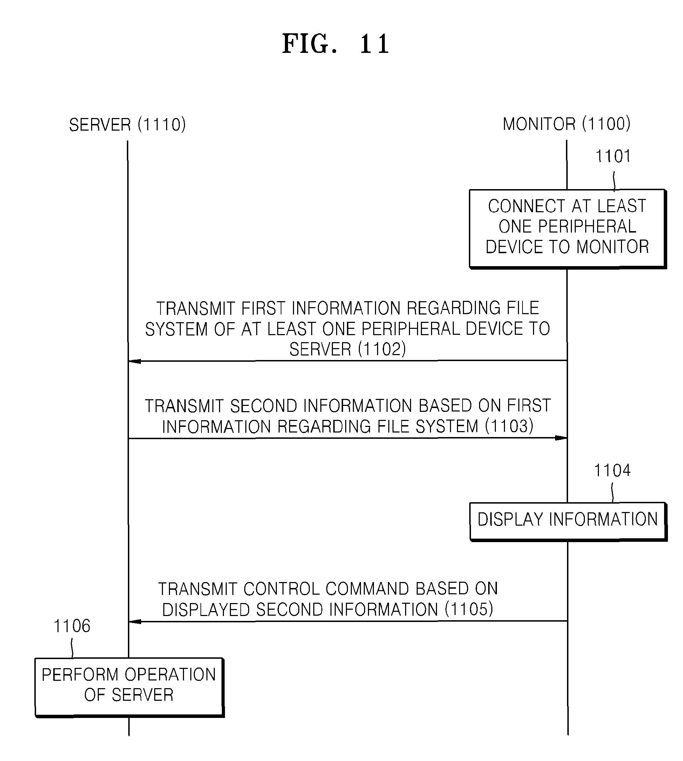

FIG. 11 is a flowchart illustrating another exemplary embodiment of the present invention.

Referring to FIG. 11, when at least one peripheral device is connected to a monitor 1100 in a network which consists of a plurality of monitors and a server (operation 1101), the monitor 1100 transmits first information regarding a file system of the least one peripheral device connected to the monitor 1100 to a server 1110, in operation 1102. The monitor 1100 is one of the plurality of the monitors.

When the server 1110 receives the information regarding the file system of the least one peripheral device from the monitor 1100, the server 1110 transmits second information based on the first information regarding the file system received from the monitor 1100 to the monitor 1100, in operation 1103.

When the monitor 1100 receives the second information from the server 1110, the monitor 1100 displays the second information in operation 1104. Then, the monitor 1100 transmits a control command based on the displayed second information to the server 1110 in operation 1105. The control command corresponds to the displayed second information.

When the server 1110 receives the control command from the monitor 1100, the server 1110 performs an operation of the server based on the control command in operation 1106.

A program that performs a remote access control method on a peripheral device connected to a monitor, according to embodiments of the present invention, can be embodied as computer readable code in a computer readable medium. The computer readable medium may be any recording apparatus capable of storing data that is read by a computer system, e.g., a read-only memory (ROM), a random access memory (RAM), a compact disc (CD)-ROM, a magnetic tape, a floppy disk, an optical data storage device, and so on. Also, the computer readable medium may be a carrier wave that transmits data via the Internet, for example. The computer readable medium can be distributed among computer systems that are interconnected through a network, and the present invention may be stored and implemented as a computer readable code in the distributed system.

As described above, according to preferred embodiments of the present invention, a server at a remote site can access a file system of a peripheral device connected to a monitor that supports a remote session, thereby allowing a manager of the server to manage and use a file in the peripheral device connected to the monitor at a remote place as conveniently as when using a file in a peripheral device connected directly to the server. Therefore, it is possible to establish a network that allows the server to use the peripheral device connected to the monitor, not the server.

Also, whenever a file system installed in the monitor is changed by a change in a peripheral device connected to the monitor, the server can remotely access the peripheral device, and thus, the manager of the server can monitor a file system of the peripheral device at a remote place in real time.

While this invention has been particularly shown and described with reference to exemplary embodiments thereof, it will be understood by those skilled in the art that various changes in form and details may be made therein without departing from the spirit and scope of the invention as defined by the appended claims.
Attention is directed to all papers and documents which are filed concurrently with or previous to this specification in connection with this application and which are open to public inspection with this specification, and the contents of all such papers and documents are incorporated herein by reference.
All of the features disclosed in this specification (including any accompanying claims, abstract and drawings), and/or all of the steps of any method or process so disclosed, may be combined in any combination, except combinations where at least some of such features and/or steps are mutually exclusive.
Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.
The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A remote access control method which is performed on at least one peripheral device (202 - 207) connected to a plurality of monitors (201_1, 201_2,..., 201_n) in a network which establishes a remote connection between the plurality of the monitors and a server (220), the method comprising:
(a) the server receiving information regarding a file system of the at least one peripheral device from one of the plurality of monitors, and displaying the information regarding the file system;
(b) the server receiving a control command based on the displayed information, and transmitting the control command to the one of the plurality of monitors;
(c) the server receiving a control result corresponding to the control command from the one of the plurality of monitors, and operating according to the received control result.

2. The method of claim 1, wherein during (a), an explorer program installed in the server (220) is used.

3. The method of claim 1 or claim 2, wherein during (c), if the control command is an edit command regarding the file system, the server (220) displays the information regarding the file system and the information containing the received control result, and
if the control command is a reproduction command regarding a file selected based on the displayed information, the server reproduces the selected file based on the received control result.

4. The method of claim 2, wherein during (c), if the control command is an edit command regarding the file system, the server (220) displays the information regarding the file system and the information containing the received control result, and
if the control command is a reproduction command regarding a file selected based on the displayed information, the server reproduces the selected file based on the received control result.

5. A remote access control method which is performed on at least one peripheral device (202 - 207) connected to a plurality of monitors (201_1, 201_2,..., 201_n) in a network which establishes a remote connection between the plurality of monitors and a server, the method comprising:
(a) the server (220) receiving information regarding a file system of the at least one peripheral device from one of the plurality of monitors, and determining whether the received information regarding the file system contains one of an installing request for the file system and an uninstalling request for the file system;
(b) if the received information contains the installing request for the file system, the server installing the file system received from the one of the plurality of monitors, and displaying the information regarding the installed file system;
(c) the server controlling the file system based on the displayed information; and
(d) if the received information contains the uninstalling request for the file system, the server uninstalling the file system.

6. The method of claim 5, wherein (c) comprises:
(c1) the server (220) receiving a control command regarding the file system based on the displayed information, and transmitting the control command to the one of the plurality of monitors; and
(c2) the server receiving a control result corresponding to the control command from the one of the plurality of monitors, and operating according to the received control result.

7. The method of claim 5, wherein (c) comprises performing one of edit control regarding the file system and reproduction control regarding a file selected based on the displayed information.

8. The method of claim 6, wherein (c) comprises performing one of edit control regarding the file system and reproduction control regarding a file selected based on the displayed information.

9. A remote access control method performed on at least one peripheral device (202 - 207) connected to a plurality of monitors (201_1, 201_2,..., 201_n) in a network that establishes a remote connection between the plurality of the monitors and a server (220), the method comprising:
(a) if a change event occurs in the at least one peripheral device, a monitor connected to the peripheral device changing a file system regarding the peripheral device;
(b) the monitor checking whether the monitor is remotely connected to the server;
(c) if the monitor is remotely connected to the server, the monitor transmitting information regarding the changed file system to the server;
(d) the monitor receiving a control command regarding the file system from the server, and operating according to the received control command; and
(e) the monitor transmitting the operating result to the server.

10. The method of claim 9, wherein (d) comprises:
(d1) if the control command is an edit control command regarding the file system, editing the changed file system and the file system of the peripheral device (202 - 207);
(d2) the monitor transmitting the result of editing the file system, as a control result corresponding to the edit control command, to the server(220);
(d3) if the control command is a reproduction command regarding a file selected based on the file system, reading information regarding the selected file from the peripheral device; and
(d4) the monitor transmitting the read information, as a result corresponding to the reproduction command, to the server.

11. A remote access control method performed on at least one peripheral device (202 - 207) connected to a plurality of monitors (201_1, 201_2,..., 201_n) in a network that establishes a remote connection between the plurality of the monitors and a server (220), the method comprising:
(a) if a change event occurs in the at least one peripheral device, a monitor connected to the peripheral device determining whether the change event is caused by one of connecting the peripheral device to or inserting a medium into the monitor, and separating the peripheral device from or ejecting the medium from the monitor;
(b) if the change event is caused by the connection of the peripheral device or the insertion of the medium, the monitor determining whether a file system of the peripheral device is supportable;
(c) if the file system in the peripheral device is supportable, the monitor installing the file system of the peripheral device, and requesting the server to install the file system; and
(d) if the change event is caused by the separation of the peripheral device or the ejection of the medium, the monitor uninstalling the file system in the peripheral device, and requesting the server to uninstall the file system.

12. The method of claim 11, further comprising:
(e) the monitor receiving a control command regarding the file system from the server (220), and operating according to the received control command; and
(f) the monitor transmitting the operating result to the server.

13. A remote access control method performed on at least one peripheral device (202 - 207) connected to a plurality of monitors (201_1, 201_2,..., 201_n) in a network that establishes a remote connection between the plurality of monitors and a server (220), the method comprising:
(a) if a change event occurs in one of the least one peripheral device, one of the plurality of monitors changing a file system in the peripheral device;
(b) the monitor transmitting information regarding the changed file system to the server;
(c) the server displaying the information regarding the changed file system;
(d) the server receiving a control command based on the displayed information regarding the file system, and transmitting the control command to the monitor;
(e) the monitor receiving the control command and operating according to the control command;
(f) the monitor transmitting the operating result to the server; and
(g) the server operating based on the operating result received from the monitor.

14. A remote access control system comprising:
at least one monitor (201_1, 201_2,..., 201_n) which is connected to at least one peripheral device (202 - 207), and changes a file system of the peripheral device if a change event occurs in the peripheral device; and
a server (220) which is remotely connected to the monitor via the Ethernet (210), receives information regarding the changed file system from the at least one monitor and manages the file system of the peripheral device based on the received information.

15. The system of claim 14, wherein, if the change event occurs due to one of connection of the peripheral device (202 - 207) to the monitor (201_1, 201_2,..., 201_n) and insertion of a medium into the monitor, the monitor installs the file system and requests the server (220) to install the file system, and the server installs the file system upon receiving the request from the monitor, and displays information regarding the file system.

16. The system of claim 14, wherein, if the change event occurs due to separation of the peripheral device (207 - 207) from the monitor (201_1, 201_2,..., 201_n) or ejection of a medium from the monitor, the monitor uninstalls the file system and requests the server (220) to uninstall the file system, and the server uninstalls the file system upon the request from the monitor.

17. The system of claim 16, wherein the monitor (201_1, 201_2,..., 201_n) is connected to the peripheral device (202 - 207) via a universal serial bus.

18. A server (220) on a network which establishes a remote connection between the server and at least one monitor (202 - 207), the monitor being connected to at least one peripheral device (201_1, 201_2,..., 201_n), the server comprising:
an Ethernet interface unit (311) establishing remote communications with the monitor via an Ethernet (210);
a server controller (312) receiving information regarding a file system of the peripheral device from the Ethernet interface unit, displaying the received information, and managing the file system of the peripheral device based the displayed information; and
a display unit (314) displaying the information regarding the file system under control of the server controller.

19. A monitor (201 - 1)on a network which establishes a remote connection between at least one monitor connected to at least one peripheral device (202 - 204), and a server (220), the monitor comprising:
an Ethernet interface unit (305) establishing a remote communication with the server via an Ethernet (210);
a universal serial bus port (302) connected to the peripheral device via a universal serial bus; and
a monitor controller (301) changing a file system of a peripheral device and transmitting information regarding the changed file system to the Ethernet interface unit, if the controller recognizes that a change event occurs in the peripheral device via the universal serial bus port.

20. A recording medium having embodied thereon a program for executing a remote access control method which is performed on at least one peripheral device (202 - 207) connected to a plurality of monitors (201_1, 201_2,..., 201_n) in a network which establishes a remote connection between a server (220) and the plurality of the monitors, the method comprising:
(a) the server receiving information regarding a file system in the at least one peripheral device from one of the plurality of monitors, and displaying the information regarding the file system;
(b) the server receiving a control command based on the displayed information, and transmitting the control command to the monitor; and
(c) the server receiving a control result corresponding to the control command from the monitor, and operating according to the received control result.

21. A recording medium having embodied thereon a program for executing a remote access control method which is performed on at least one peripheral device (202 - 207 connected to a plurality of monitors (201_1, 201_2,..., 201_n) in a network which establishes a remote connection between a server (220) and the plurality of the monitors, the method comprising:
(a) if a change event occurs in the at least one peripheral device, a monitor connected to the peripheral device changing a file system regarding the peripheral device;
(b) the monitor checking whether the monitor is remotely connected to the server;
(c) if the monitor is remotely connected to the server, the monitor transmitting information regarding the changed file system to the server;
(d) the monitor receiving a control command regarding the file system from the server, and operating according to the received control command; and
(e) the monitor transmitting the operating result to the server.

22. An access control method which is performed on at least one peripheral device (202 - 207 connected to at least one of a plurality of monitors (201_1, 201_2,..., 201_n) in a network which comprises the plurality of monitors and a server (220), the method comprising:
transmitting first information regarding a file system of the at least one peripheral device from the at least one of the plurality of monitors to the server, when the at least one peripheral device is connected to at least one of the plurality of monitors;
displaying second information based on the first information on the at least one of the plurality of monitors; and
transmitting a control command based on the displayed second information from the at least one of the plurality of monitors to the server.

23. The method of Claim 22, further comprising:
performing an operation of the server (220) according to the transmitted control command.
